# EUROPÄISCHE PATENTANMELDUNG

(11) **EP 1 038 623 A2**
(43) Veröffentlichungstag der Anmeldung: **27.09.2000**
(21) Anmeldenummer: 00106396.5
(22) Anmeldetag: 24.03.2000
(51) Int. Cl.: B23D 45/20, B23D 45/10

(54) **Vorrichtung zum Ablängen von Langmaterial**

(30) Priorität: 25.03.1999 DE 19913402
(71) Anmelder: Pieper, Ulrich, 49191 Belm (DE)
(72) Erfinder: Pieper, Ulrich, 49191 Belm (DE)

(57) **Zusammenfassung**

Die Erfindung betrifft eine Vorrichtung zum Ablängen von Langmaterial, insbesondere von Kupferrohr 2. Das Kupferrohr 2 ist in der Vorrichtung von einem Führungsband 4 getragen. Parallel zum Führungsband 4 ist eine mit dem Kupferrohr 2 bewegte Trennvorrichtung 6 vorgesehen, welche von einem Transportmittel 14 umlaufend geführte Sägen 7 umfaßt. Diese greifen mit ihren rotierenden Sägeblättern 10 bei Sägehub in am Führungsband 4 ausgebildete Sägetaschen 11. Die Sägeblätter 10 sind hierbei mit ihrer Drehachse 12 parallel zum Kupferrohr 2 ausgerichtet und quer dazu das Kupferrohr 2 trennend zwangsgeführt. Der Sägehub wird unter dem Einfluß einer Kurvenbahn 37 vollzogen, an der die Transporteinheiten 9 der Sägen 7 linear zwangsgeführt sind.

## Beschreibung

Die Erfindung betrifft eine Vorrichtung zum Ablängen von Langmaterial wie Stangen, Rohre usw., wobei das Langmaterial von einer mitlaufenden Führung getragen ist und parallel zur Führung eine mit dem Langmaterial bewegte Trennvorrichtung vorgesehen ist.

Bei der kontinuierlichen Herstellung von langgestreckten Teilen, beispielsweise von Kupferrohren, werden bedarfsgerechte Einzellängen von dem im Prinzip endlos gefertigten Langmaterial abgeteilt. Dies kann durch Abscheren erfolgen, wie es beispielsweise aus der DE 30 22 884 C2 bekannt ist. Üblich ist auch, die Einzellängen fliegend abzuteilen. Hierbei laufen die Schneid- und Trennwerkzeuge mit dem Langmaterial während des Schneidvorgangs mit. Es kommen sowohl Sägeals auch Schervorrichtungen zum Einsatz, welche jeweils kurzzeitig aus einer Grundstellung auf die jeweilige Liniengeschwindigkeit beschleunigt werden, das Material durchtrennen und anschließend wieder in ihre Grundstellung zurückkehren. Diese bekannten Vorrichtungen stoßen jedoch hinsichtlich Taktzeiten und Leistung an ihre Grenzen. Auch können kurze fehlerhafte Abschnitte im Langmaterial nicht selektiv herausgetrennt werden. Die Ausschußlänge ist stets von der jeweiligen Einzellänge bestimmt. Scherend arbeitende Vorrichtungen haben zudem den Nachteil, daß das Langmaterial in der Trennebene deformiert wird und nachbearbeitet werden muß. Je nach Länge der Deformationszone entsteht hier zusätzlicher vermeidbarer Ausschuß.

Der Erfindung liegt daher ausgehend vom Stand der Technik die Aufgabe zugrunde, eine Vorrichtung zum Ablängen von Langmaterial leistungsmäßig und anwendungstechnisch zu verbessern, wobei eine hohe Schnittgenauigkeit und eine Verringerung von auftretendem Ausschuß erreicht wird.

Die Lösung dieser Aufgabe besteht nach der Erfindung in einer Vorrichtung gemäß Anspruch 1, bei der das Langmaterial von einer mitlaufenden Führung getragen ist und parallel zur Führung eine mit dem Langmaterial bewegte Trennvorrichtung vorgesehen ist. Die Trennvorrichtung umfaßt mindestens eine von einem Transportmittel umlaufend geführte Säge mit einem rotierenden Sägeblatt, welches im Bereich einer in der Führung ausgebildeten Sägetasche mit seiner Drehachse parallel zum Langmaterial ausgerichtet und quer zum Langmaterial dieses trennend zwangsgeführt ist.

Die abhängigen Ansprüche 2 bis 6 haben bevorzugte konstruktive Ausführungen und prinzipielle Weiterbildungen dieser Lösung zum Inhalt.

Vorteilhaft kann die mitlaufende Führung für das Langmaterial durch ein in sich geschlossenes umlaufendes Führungsband realisiert werden.

Durch das rotierende Sägeblatt wird ein sauberer Sägeschnitt ohne Deformation der Schnittenden erreicht.

Der Abstand zwischen zwei Sägeschnitten ist im laufenden Betrieb bestimmbar. Dementsprechend können sowohl eine vorgegebene Standardlänge vom Langmaterial als auch im Bedarfsfall, beispielsweise bei festgestellten Schäden im Langmaterial, von der Standardlänge abweichende kürzere Abschnitte abgeteilt werden. Ausschußlängen werden so deutlich reduziert.

Der Abstand zwischen zwei Sägeschnitten kann beispielsweise durch eine Regulierung der Geschwindigkeit des Transportmittels der Trennvorrichtung bestimmt werden. Vorteilhaft sind dem Transportmittel mehrere jeweils an einer Transporteinheit verlagerbare Sägen zugeordnet, wie dies Anspruch 2 vorsieht, wobei die jeweils zur Durchführung eines Sägeschnitts zum Eingriff gelangende Säge bestimmbar ist.

Die Sägen werden durch das Transportmittel umlaufend geführt. Unter umlaufend ist erfindungsgemäß sowohl eine Führung der Sägen an einer in sich geschlossenen Bahn zu verstehen als auch eine offene Ausführung mit separatem System zur Rückführung der Sägen. Das heißt, die Sägen werden nur in Fertigungsrichtung geführt. Anschließend werden die Sägen entnommen und extern der Vorrichtung wieder zugeführt.

Ein Teil der Führungsbahn der Sägen läuft parallel zur Fertigungslinie. Auf diesem Teilstück führen die Sägen zwangsgeführt einen Sägehub senkrecht zur Längsachse des Langprofils aus, wobei eine saubere Trennung des Langmaterials erfolgt. Das Langmaterial ist beidseitig der Sägetasche gestützt. Hierdurch wird eine Deformierung an den Schnittkanten vermieden.

Der Sägehub kann grundsätzlich auf verschiedene Weise eingeleitet bzw. durchgeführt werden, beispielsweise mittels eines Kurvengetriebes oder eines Spindeltriebs. Eine besonders vorteilhafte betrieblich robuste und wenig anfällige Lösung besteht gemäß den Merkmalen des Anspruchs 3 darin, die Sägen unter dem Einfluß einer Kurvenbahn an der Transporteinheit linear zwangszuführen. Die Linearführung quer zum Langmaterial kann sowohl vertikal als auch senkrecht hierzu erfolgen.

Für die Praxis bietet es sich in diesem Zusammenhang an, die Sägen anforderungsgerecht im Umlauf auf die Kurvenbahn auszugleisen. Über die Kurvenbahn wird die jeweilige Säge abgesenkt, wobei sie den Sägeschnitt ausführt. Anschließend wird die Säge dem Verlauf der Kurvenbahn folgend wieder angehoben und in den Umlauf zurückgeführt.

Nach den Merkmalen des Anspruchs 4 sind die Transporteinheiten, welche die Sägen tragen, an zwei Führungsschienen verlagerbar. Dies kann sowohl gleitend als auch rollend erfolgen.

Die Transporteinheiten weisen einen U-förmig konfigurierten Rahmen auf welcher mit seinen Schenkeln drehgelenkig zwischen Tragplatten angeordnet ist, die an das Transportmittel angelenkt sind (Anspruch 5). Die Transporteinheiten bilden so kurvengängige Schlitten, welche problemlos mit dem Transportmittel um Kurven geleitet werden können.

Gemäß den Merkmalen des Anspruchs 6 umfaßt das Transportmittel einen über Zahnscheiben geführten Zahnriemen, der über Mitnehmer mit den Tragplatten gekoppelt ist. So ist eine schlupflose Kraftübertragung für den Antrieb der Transporteinheit möglich. Diese Ausführung ist robust, wenig störanfällig und wartungsfreundlich.

Die erfindungsgemäße Vorrichtung zeichnet sich insgesamt zunächst durch eine Reduzierung von Ausschußmengen aus. Da ein sauberer Sägeschnitt durchgeführt wird, entsteht kein zusätzlicher Ausschuß durch deformierte Rohrenden wie beim Hacken oder Scheren. Durch die Möglichkeit, variabel auf die jeweils abzutrennenden Einzellängen einzuwirken, kann eine Minimierung der Abfallmengen erreicht werden. Auch bei hohen Geschwindigkeiten können kurze fehlerhafte Rohrstücke herausgetrennt werden, und zwar ohne daß hierfür die Geschwindigkeit des Langmaterials in der Fertigungslinie in der Vorrichtung reduziert werden muß.

Darüber hinaus ermöglicht die erfindungsgemäße Vorrichtung höhere Geschwindigkeiten und höhere Taktzeiten, so daß die Leistung der Vorrichtung gesteigert werden kann.

Die Erfindung ist nachfolgend anhand eines in den Zeichnungen dargestellten Ausführungsbeispiels näher beschrieben. Es zeigen:
- Figur 1: eine erfindungsgemäße Vorrichtung in der Seitenansicht;
- Figur 2: eine Draufsicht auf die Darstellung der Figur 1 gemäß der Linie II-II und
- Figur 3: einen Vertikalschnitt durch die Vorrichtung entlang der Linie III-III in Figur 2.

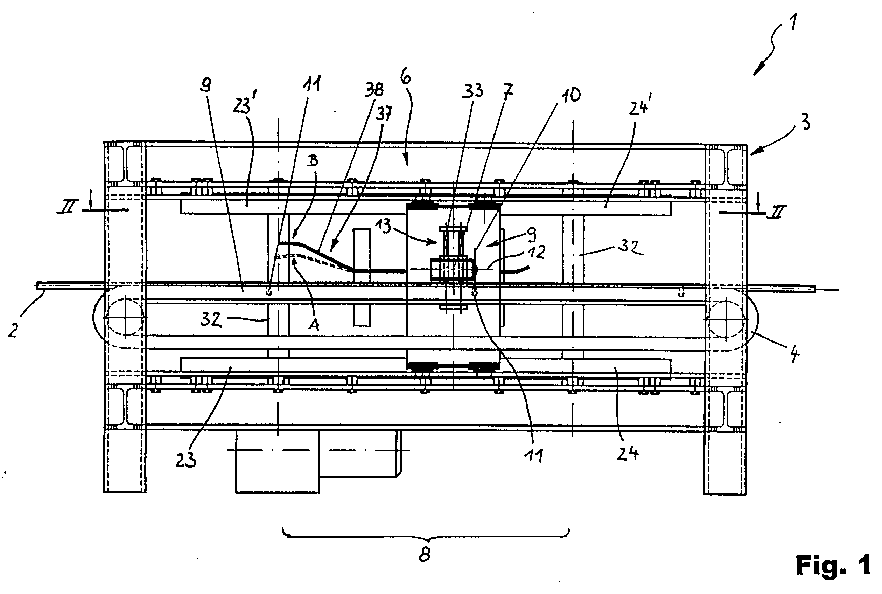

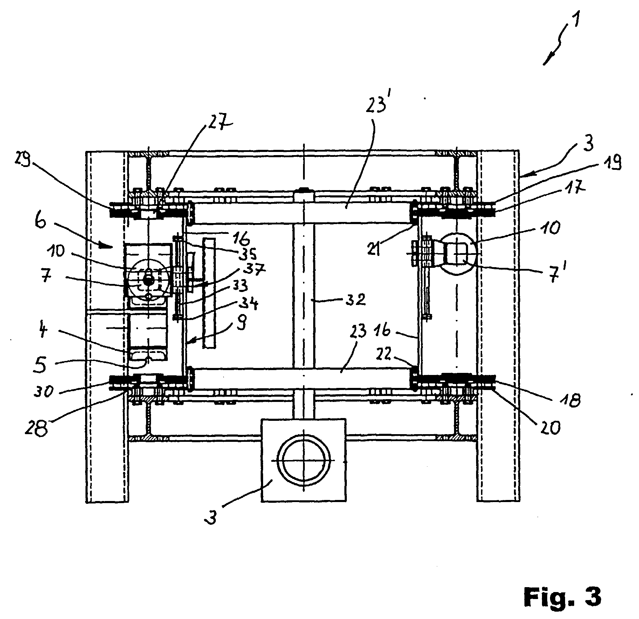

In den Figuren 1 bis 3 ist eine Vorrichtung 1 zum Ablängen von im Strang hergestelltem Langmaterial 2, insbesondere von Kupferrohren, dargestellt.

Das Kupferrohr 2 verläßt den Herstellungsprozeß und gelangt über eine Temperstrecke, wo eine Abkühlung stattfindet, zur Vorrichtung 1. Die Vorrichtung 1 umfaßt einen aus Quer-, Längs- und Vertikalträgern aufgebauten stabilen Grundrahmen 3. In der Vorrichtung 1 wird das Kupferrohr 2 von einer durch ein Führungsband 4 gebildeten Führung getragen. Das Führungsband 4 weist hierzu eine halbrunde Aufnahme 5 auf. In der Vorrichtung 1 ist eine Trennvorrichtung 6 angeordnet, welche Trennwerkzeuge in Form von Sägen 7, 7' aufweist, die auf einem Abschnitt 8 parallel zum Führungsband 4 geführt sind.

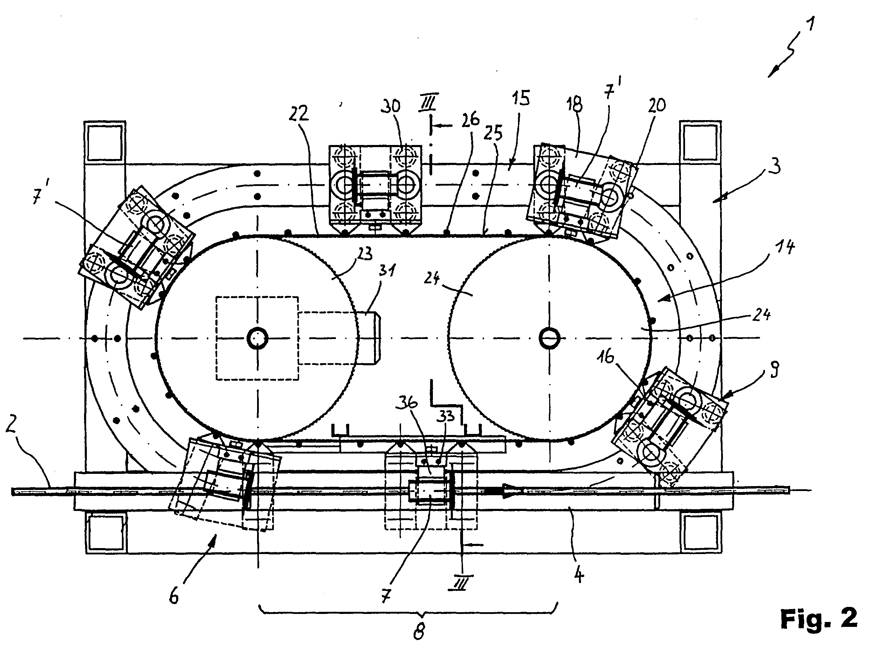

In dem hier dargestellten Ausführungsbeispiel umfaßt die Trennvorrichtung 6 insgesamt sechs Sägen 7, 7', wie Figur 2 zeigt. Der Übersicht halber ist in der Figur 1 nur eine Säge 7 dargestellt. Die Sägen 7, 7' werden mit dem Kupferrohr 2 bewegt und führen hierbei in vorbestimmten Abständen einen Sägeschnitt aus. In der Praxis ist es üblich, Einzellängen von 5.000 mm vom Kupferrohr 2 abzuteilen.

Die Sägen 7, 7' sind in Transporteinheiten 9 angeordnet. Sie weisen jeweils ein rotierendes Sägeblatt 10 auf, welches beim Sägeschnitt in eine am Führungsband 4 ausgebildete Sägetasche 11 eingreift. Hierbei ist das Sägeblatt 10 mit seiner Drehachse 12 parallel zum Kupferrohr 2 ausgerichtet. Quer zum Kupferrohr 2 ist die Säge 7, 7' und damit das Sägeblatt 10 an einer Linearführung 13 zwangsgeführt.

Die Transporteinheiten 9 werden von einem Transportmittel 14 auf einer Umlaufbahn 15 geführt. Jede Transporteinheit 9 weist einen U-förmig konfigurierten Rahmen 16 auf. Dieser ist mit seinem oberen Schenkel 17 und seinem unteren Schenkel 18 drehgelenkig zwischen Tragplatten 19, 20 angeordnet, welche an das Transportmittel 14 angelenkt sind.

Das Transportmittel 14 umfaßt einen oberen und einen unteren Zahnriemen 21, 22, welche über Zahnscheiben 23, 23', 24, 24' geführt sind. An der Außenseite 25 der Zahnriemen 21, 22 sind Mitnehmer 26 vorgesehen, über die die Tragplatten 19, 20 der Transporteinheiten 9 mit den Zahnriemen 21, 22 gekuppelt sind.

Auf der Umlaufbahn 15 bewegen sich die Transporteinheiten 9 an einer oberen und einer unteren Führungsschiene 27 bzw. 28. Hierbei stützen sich die Transporteinheiten 9 an den Führungsschienen 27, 28 jeweils mit vier horizontal angeordneten Rollen 29, 30 ab. Der Antrieb des Transportmittels 14 erfolgt über einen unterhalb der Zahnscheibe 23 angebrachten Getriebemotor 31.

Man erkennt, daß die Zahnscheiben 23, 24 bzw. 23', 24' über Achsen 32 verbunden sind.

Wie bereits erwähnt, sind die Sägen 7, 7' an der Transporteinheit 9 linear zwangsgeführt. Die Linearführung 13 umfaßt zwei Führungsstangen 33, welche senkrecht zwischen einem oberen und einem unteren Joch 34 bzw. 35 angeordnet sind. An den Führungsstangen 33 ist die Säge 7, 7' mittels eines Führungsblocks 36 lageorientiert und vertikal verlagerbar.

Der Sägehub einer Säge 7 wird durch eine Kurvenbahn 37 vollzogen. Hierzu wird eine Säge 7 aus der Umlaufbahn 15 über die Kurvenbahn 37 geführt. Dies erfolgt mittels einer hier nicht näher erläuterten Weiche 38. Anhand der in der Figur 1 gestrichelt dargestellten Linienführung erkennt man, daß die Weiche 38 von einer Grundstellung A in eine Führungsstellung B verlagerbar ist. Der Weichenantrieb ist nicht dargestellt. In der Führungsstellung B wird die ankommende Säge 7 der Kurvenbahn 37 folgend an den Führungsstangen 33 linear zwangsgeführt abgesenkt. Hierbei durchtrennt sie das Kupferrohr 2 senkrecht. Das rotierende Sägeblatt 10 führt einen sauberen Sägeschnitt aus ohne Deformation der Schnittenden. Beim Sägehub greift das Sägeblatt 10 in die Sägetasche 11 des Führungsbands 4 ein.

Nach Beendigung des Trennvorgangs wird die Säge 7 der Kurvenbahn 37 folgend wieder angehoben und zusammen mit den übrigen Sägen 7' in den Umlauf zurückgeführt.

In dem hier dargestellten Ausführungsbeispiel sind die Sägen 7, 7' so angeordnet, daß zwischen ihnen jeweils ein Abstand von 1.000 mm besteht. Bei einer üblicherweise vorgenommenen Ablängung auf Einzellängen von 5 m führt folglich jede fünfte Säge 7, 7' einen Sägehub aus. Aufgrund der Tatsache, daß sechs Sägen 7, 7' in Umlauf sind, schneiden die einzelnen Sägen 7, 7' alternierend. Sie sind so alle gleich belastet.

Wird in der Fertigungslinie eine fehlerhafte Stelle im Kupferrohr 2 erkannt, kann unabhängig von der vorgesehenen Standardlänge anforderungsgerecht auch ein kürzeres Teilstück von beispielsweise 1 m vom Langmaterial abgeteilt werden. Hierzu werden zwei im Umlauf hintereinander geführte Sägen 7, 7' nacheinander angesteuert. In dem hier erläuterten Ausführungsbeispiel würde dann ein Teilstück von 1 m abgeteilt. Auf diese Weise reduziert sich die Ausschußmenge, da ansonsten die komplette Einzellänge von 5 m als Ausschuß zu behandeln wäre.

Grundsätzlich können auch noch kürzere Teilstücke vom Kupferrohr 2 abgeteilt werden. Dies kann über eine Regulierung der Geschwindigkeit der Transporteinheiten 9 bzw. des Transportmittels 14 erfolgen. Auch kann mit steigender Anzahl der Sägen 7, 7' der Abstand zwischen zwei Sägeschnitten verringert werden.

### Bezugszeichenaufstellung

- 1: - Vorrichtung
- 2: - Langmaterial
- 3: - Grundrahmen
- 4: - Führungsband
- 5: - Aufnahme
- 6: - Trennvorrichtung
- 7: - Säge
- 7': - Säge
- 8: - Abschnitt
- 9: - Transporteinheit
- 10: - Sägeblatt
- 11: - Sägetasche
- 12: - Drehachse v. 10
- 13: - Linearführung
- 14: - Transportmittel
- 15: - Umlaufbahn
- 16: - Rahmen
- 17: - oberer Schenkel v. 16
- 18: - unterer Schenkel v. 16
- 19: - Tragplatte
- 20: - Tragplatte
- 21: - Zahnriemen
- 22: - Zahnriemen
- 23: - Zahnscheibe
- 23': - Zahnscheibe
- 24: - Zahnscheibe
- 24': - Zahnscheibe
- 25: - Außenseite v. 21, 22
- 26: - Mitnehmer
- 27: - Führungsschiene
- 28: - Führungsschiene
- 29: - Rolle
- 30: - Rolle
- 31: - Getriebemotor
- 32: - Achse
- 33: - Führungsstange
- 34: - Joch
- 35: - Joch
- 36: - Führungsblock
- 37: - Kurvenbahn
- 38: - Weiche
- A: - Grundstellung v. 38
- B: - Führungsstellung v. 38

## Patentansprüche

1. Vorrichtung zum Ablängen von Langmaterial, wie Stangen, Rohre usw., wobei das Langmaterial (2) von einer mitlaufenden Führung (4) getragen ist und parallel zur Führung (4) eine mit dem Langmaterial (2) bewegte Trennvorrichtung (6) vorgesehen ist, bei welcher die Trennvorrichtung (6) mindestens eine von einem Transportmittel (14) umlaufend geführte Säge (7, 7') mit einem rotierenden Sägeblatt (10) umfaßt, welches im Bereich einer an der Führung (4) ausgebildeten Sägetasche (11) mit seiner Drehachse (12) parallel zum Langmaterial (2) ausgerichtet und quer zum Langmaterial (2) dieses trennend zwangsgeführt ist.

2. Vorrichtung nach Anspruch 1, bei welcher dem Transportmittel (14) mehrere jeweils an einer Transporteinheit (9) verlagerbare Sägen (7, 7') zugeordnet sind.

3. Vorrichtung nach Anspruch 1 oder 2, bei welcher die Sägen (7, 7') unter dem Einfluß einer Kurvenbahn (37) an der Transporteinheit (9) linear zwangsgeführt sind.

4. Vorrichtung nach Anspruch 2 oder 3, bei welcher die Transporteinheiten (9) zwischen zwei Führungsschienen (27, 28) verlagerbar sind.

5. Vorrichtung nach einem der Ansprüche 2 bis 4, bei welcher jede Transporteinheit (9) einen U-förmig konfigurierten Rahmen (16) aufweist, welcher mit seinen Schenkeln (17, 18) drehgelenkig zwischen Tragplatten (19, 20) angeordnet ist, die an das Transportmittel (14) angelenkt sind.

6. Vorrichtung nach Anspruch 5, bei welcher das Transportmittel (14) einen über Zahnscheiben (23, 23', 24, 24') geführten Zahnriemen (21, 22) umfaßt, der über Mitnehmer (26) mit den Transporteinheiten (9) gekoppelt ist.
